# EUROPEAN PATENT APPLICATION

(11) **EP 4 173 709 A1**
(43) Date of publication of application: **03.05.2023**
(21) Application number: 21205941.4
(22) Date of filing: 02.11.2021
(51) Int. Cl.: B01L 3/00, B01L 7/00, G01N 21/25, G01N 21/64, G02B 21/36, G01N 21/03

(54) **APPARATUS FOR CONDUCTING A BIOCHEMICAL ASSAY**

(71) Applicant: Single Technologies AB, 112 34 Stockholm (SE)
(72) Inventor: STRÖMQVIST, Johan, 112 34 Stockholm (SE); SAHLGREN, Bengt, 112 34 Stockholm (SE); TINGSTAM, Nils, 112 34 Stockholm (SE); GORAN, Alan, 112 34 Stockholm (SE); ADRUP, Joakim, 112 34 Stockholm (SE); RASMUSSEN, Jens, 112 34 Stockholm (SE)
(74) Representative: AWA Sweden AB

(57) **Abstract**

An apparatus (100) for conducting a biochemical assay on a sample is provided. The apparatus comprises a housing (110) enclosing a reaction chamber (112), a rotation generating member (120) configured to support a rotatable body (130) such that at least part of the rotatable body can be arranged within the reaction chamber, and a humidifier (140) configured to release moisture to the reaction chamber. The rotation generating member is further configured to rotate the rotatable body around a longitudinal axis (A) of the rotatable body while the assay is performed. A corresponding method is also disclosed.

## Description

### Technical field

The present invention relates to an apparatus for conducting a biochemical assay on a sample and to a method for conducting a biochemical assay.

### Background

Biochemical assays are known as investigative procedures for qualitatively assessing or quantitatively measuring the presence, amount or functional activity of an analyte, or sample. One example of such procedure and an apparatus for such procedure is disclosed in WO2016/030464 and involves a confocal scanner and a rotating sample holder. The sample holder comprises a cylindrical body and the samples are arranged on the outer surface of the cylinder. The scanner may comprise a confocal microscope configured to illuminate and image the samples as the holder rotates around its length axis. This technique may for example be employed for sequencing DNA, wherein samples of immobilized single strands of DNA may be flushed with a solution (or reagent) of nucleotides equipped with fluorophores followed by an imaging step to measure the fluorescence and determine which nucleotide (if any) was incorporated on the strand. The scanning of the rotating sample holder allows for a relatively high throughput in terms of number of scanned samples per unit time, which enable statistical methods and big data analysis to be employed. The throughput is however known to be limited by practical considerations such as the time it takes to heat the samples to a suitable reaction temperature and to achieve a suitable environment for the reactions to take place. In particular when a multitude of assays are performed after one another in the apparatus, the heating time can significantly limit the throughput of said apparatus.

Consequently, there is a need for improved procedures that limit the time it takes for the apparatus to generate a suitable reaction temperature and environment for performing the assay.

### Summary

It is an object of the present invention to provide improved techniques for performing biochemical assays on samples, and to overcome or alleviate at least some of the drawbacks associated with the prior art techniques.

These and other objects, which will become apparent in the following, are accomplished by an apparatus and a method according to the independent claims.

Thus, according to a first aspect, an apparatus for conducting a biochemical assay on a sample is provided. The apparatus comprises a housing enclosing a reaction chamber, a rotation generating member configured to support a rotatable body, wherein the rotatable body is configured to hold at least one sample at an outer surface thereof, and a humidifier configured to humidify an atmosphere in the reaction chamber. The rotation generating member is configured to support the rotatable body such that at least part of the rotatable body can be arranged within the reaction chamber, and further to rotate the rotatable body around a longitudinal axis of the rotatable body while at least a part of the assay is performed.

According to a second aspect, a method for performing an assay is provided, comprising:
arranging a rotatable body at least partly in a reaction chamber enclosed by a housing, wherein at least one sample to be studied in the assay is arranged on an outer surface of the rotatable body;
rotating the rotatable body around a longitudinal axis of the rotatable body; and
humidifying an atmosphere in the reaction chamber.

The requirements on a reaction chamber for performing biochemical assays on samples may be briefly summarized as providing a controlled, elevated temperature for the sample holder while at the same time preventing the samples from drying out. This is accomplished by the apparatus disclosed herein by the provision of a humidifier capable of generating moisture and provide it into the reaction chamber. The moisture may be added to provide a suitable environment in the reaction chamber, preventing the samples from drying out. The moisture may further condense on the sample holder. This allows for the latent heat to be transferred to the sample holder, thereby increasing the temperature of the sample holder. The inventors have found that the condensation of moisture on the sample holder allows for a faster temperature increase than for example solutions based on convection heating.

The apparatus may comprise a heat source arranged for raising the temperature of an outside surface of said rotatable body. The heat source may be a convection heat source or a radiation heat source. The heat source may be at least partly arranged within the reaction chamber.

The supply of moisture, such as for instance steam, may be controlled to regulate the condensation rate on the surface of the sample holder and thus the amount of liquid present on said surface. Adding liquid by condensation may be particularly advantageous in applications utilizing convection or radiation heating for regulating the temperature of the sample holder, as convection or radiation heating otherwise risks drying out the samples. The condensation rate may be adjusted to balance the evaporation rate so that the amount of liquid present on the surface is constant.

The term "biochemical assay on a sample" is known to the person skilled in the art and is intended to denote an analytical procedure to detect and quantify cellular processes (e.g. apoptosis, cell signaling) or metabolic reactions in a sample, preferably a biological sample. The samples may for example comprise DNA or RNA samples or fragments. It will be appreciated that samples may be chemically attached to the outer surface of the sample holder, or chemically or mechanically attached to a matrix at the outer surface of the sample holder. Further, samples may be immobilized at the outer surface of the sample holder by means of a permeable and transparent coating. In all cases samples may be held at an outer surface of said rotatable body. Samples mat be distributed in relation to the rotatable body along an axial direction, along a rotational direction and/or along a radial direction.

The term "housing" as used herein is intended to denote a substantially closed compartment formed of connected wall portions, such as a top wall portion, a bottom wall portion and a side wall portion. The housing encloses a "reaction chamber" being defined by the inner surfaces of said wall portions. The housing should be capable of preventing debris from entering the reaction chamber. Furthermore, it should prevent a majority of the released moisture from escaping the reaction chamber during an assay such that an elevated temperature of the reaction chamber, and in particular of the part of a rotatable body provided in the reaction chamber, can be kept for at least the time it takes to perform the assay.

The shape of the housing may vary, but quadrangular or cylindrical shapes are contemplated. The housing may have a size such that it can accommodate a rotatable body acting as a sample container or sample holder therein.

Alternatively, the housing may be provided with at least one opening, preferably two opposing openings, in the wall, through which part of the rotatable body can extend. In this example, the openings are preferably provided with a seal such that the atmosphere in the reaction chamber can be substantially maintained. This alternative may be advantageous in that it avoids exposing the end portions of sample holder to potentially damaging conditions in the reaction chamber.

A "rotation generating member" is intended to denote a structure which is capable of receiving and supporting a rotatable body, and to rotate the body along a longitudinal (or length) axis of said body while the assay is performed. In the present disclosure, a rotatable body is intended to be utilized as a sample holder. The rotatable body is configured to hold samples at an outer surface thereof. Preferably, the outer surface is provided such that it surrounds a longitudinal axis of the rotatable body. Normal vectors drawn from the outer surface are preferably perpendicular to the longitudinal axis of the rotational body.

The rotatable body may for instance be a cylindrical body, with the outer surface forming a lateral surface of the cylindrical body and the longitudinal axis forming a central axis, such as a symmetry axis, of the cylindrical body. The cylindrical body may for instance be a hollow cylinder, which may be easier to heat compared to a solid cylinder. Thus, the rotatable body may comprise a hollow interior, or void, reducing its thermal mass.

An advantage with using a rotatable body is that the body can be rotated in a relatively constant manner, allowing for a steady state motion to be maintained without acceleration. Rotation as a means of motion is advantageous in terms of precision and allows for a relatively predictable and well-controlled trajectory of the samples during the assay. Preferably, the longitudinal axis may be an axis of rotational symmetry of the sample holder. Embodiments wherein the sample holder is rotated during a part of the assay and held in a fixed position during another part of the assay are encompassed within the scope of the inventive concept.

By rotating the rotatable body, various parts of the sample holder (and consequently various samples), can be provided in proximity to various assay-related objects in the reaction chamber, such as a dispenser for dispensing reagents, or a device for imaging the sample. Consequently, the rotation allows for efficient transportation of the samples in the reaction chamber to various objects related to the assay.

The rotation generating member of the present invention is configured to receive a rotatable body acting as a sample holder such that at least part of the sample holder can be arranged in the reaction chamber.

In one alternative, when the reaction chamber is adapted to house all of the rotatable body, the rotation generating member is at least partly arranged in the reaction chamber.

In another alternative, when the reaction chamber is adapted to house only a portion of the rotatable body, the rotation generating means are arranged outside of the reaction chamber. The rotation generating member may then be arranged in the apparatus such that part of the rotatable body can be positioned in the reaction chamber through the at least one opening, such as through the opposing openings.

The rotation generating member may comprise a coupling arrangement configured to be engaged with a corresponding coupling arrangement on the rotatable body. The coupling arrangement may for example operate by means of magnetic forces enabling torque transmission without mechanical contact between the rotation generating member and the rotatable body. The coupling arrangement may be adapted to engage with a corresponding coupling arrangement provided on an end surface of the rotatable body so as to not interfere with the part of the rotatable body used for holding the samples. Furthermore, the coupling arrangement may in some examples comprise a surface portion suitable for engaging a rotational bearing supporting the sample holder during rotation. The rotational bearing may for example comprise an air bearing.

The coupling arrangement may facilitate handling of the sample holder, such as transport to, from and within the apparatus. In an example, the sample holder may be transported from the reaction chamber to a scanner, such as a confocal microscope, configured to illuminate and image the samples as the holder rotates around its longitudinal axis. The transporting may for example be achieved by means of a gripping arrangement, such as a robotic arm, gripping the sample holder transporting the sample holder to a target location. The coupling arrangement may further be configured to facilitate insertion and removal of the sample holder in the reaction chamber, or different locations within and/or outside the apparatus, and may preferably be configured to cooperate with a corresponding receiving structure at the sample holder. Transport of the sample holder may for example be required in case the assay is distributed over different physical locations or stations, wherein for example the imaging of the samples may be performed at one place and the reactions at another place.

Further, a plurality of sample holders may be used during an assay, or a sequence of assays, wherein a first sample holder may be replaced with a second one when the imaging of the first sample holder is finished. After imaging, the first sample holder may be transported to another station for performing reactions while the second sample holder is being imaged, and then returned to the imaging station when the imaging of the second sample holder is finished. In some examples a plurality of sample holders may be prepared in advance, or "offline", and stored in an intermediate storage while waiting for the assay to be initiated. This may increase uptime of the apparatus and reduce lead times of the assay.

The rotation generating member may be comprised of a first part and a second part positioned on opposing sides of the reaction chamber, or at opposing wall portions of the reaction chamber, such that opposing end portions of the rotatable body can be coupled to a respective part of the rotation generating member. The first part may be an active part generating rotation and the second part may be passive part allowing the rotatable body to rotate. Alternatively, both parts may be active and capable of rotating the rotatable body.

The term "humidifier" refers to a device capable of increasing humidity, such as presence of water, in the atmosphere in the reaction chamber. The humidifier may thus be configured to transform a liquid into gas phase (vapor) and/or into fine liquid droplets suspended in air, or another gas, and release it into the reaction chamber. Fine liquid droplets suspended in air may also be referred to as a spray or aerosol. For the purpose of the present disclosure, vapor and/or suspensions of fine liquid droplets are commonly referred to as "moisture". The atmosphere in the reaction chamber may thus be humidified by adding moisture to it.

The humidifier may employ several different techniques for generating the moisture. Examples of humidifiers include steam generators (also referred to as vaporizers), impeller humidifiers, ultrasonic humidifiers, atomizers, nebulizers, and the like. The vapor, or fine liquid droplets, may be mixed with a gas such as for example air, which may be used as a propellant expelling the mixture into the reaction chamber.

The moisture released into the reaction chamber can then condensate on a sample holder during the assay, such that an elevated temperature and/or amount of liquid suitable for at least part of a biochemical assay can be obtained on the sample holder. In some examples, the humidity in the reaction chamber may be controlled such that the dew point matches the temperature on the surface of the sample holder. This reduces the risk for the samples drying out and further limits excessive condensation on the surface. This may be of particular interest when an additional heat source, such as for example an IR based heat source, is employed to heat the sample holder.

The humidifier may be arranged inside the reaction chamber. Alternatively, part of the humidifier may be arranged outside of the reaction chamber. A conduit may then be provided from the humidifier and into the reaction chamber, through which conduit moisture can be released into the reaction chamber.

In some embodiments, the humidifier includes a steam generator comprising a heating element configured to evaporate water to produce steam, and a steam outlet configured to release the steam in the reaction chamber. The steam generator may further comprise a conduit configured to provide water to be evaporated by the heating element, and, optionally, an air conduit configured to supply an air flow to the steam generator. The conduits for air and for water may in some examples be combined, thereby allowing for a mixture of water and air to be supplied to the steam generator.

In some embodiments, the apparatus may comprise a control unit configured to control an amount of moisture released into the reaction chamber per unit time. The amount of moisture may for example be quantified by volume or weight. The amount of moisture released into the reaction chamber may preferably be based on a temperature in the reaction chamber, such as a temperature of the outer surface of the rotatable body, and more specifically a temperature of the samples to be investigated. Temperature information may be provided to the controller by means of a sensor, which may be arranged to generate a signal indicative of the temperature of the outer surface of the rotatable body. The sensor may for example be an IR sensor directed towards the rotatable body, or an electrical sensor provided at or near the liquid layer formed on the sample holder. In an example, moisture may be released to the reaction chamber during a preparation phase, in which the temperature of the rotatable body in the reaction chamber is elevated to a desired target temperature or target range. When the target temperature is reached, the moisture supply may be ceased, before the reagents are added to the sample holder. In further examples, the moisture supply is maintained also during the parts of the assay including supplying the reagents to the sample holder.

The humidifier, and thus the amount of moisture released to the reaction chamber, may for example be controlled by controlling the flow of moisture passing through the outlet of the humidifier, for instance by means of an adjustable constriction, or by adjusting a mixture between air and water supplied in the form of vapor or liquid droplets. Further, in case the humidifier is a steam generator, or vaporizer, the amount of moisture released to the reaction chamber can be controlled by controlling a power supply to a heating element of the steam generator. This allows for the heat of the heating element, and thus the amount of generated steam, to be controlled accordingly. It will be appreciated that one or several of the above measures may be combined and varied to deliver a desired amount of steam to the reaction chamber.

As mentioned above, the moisture supply may be controlled with the aim of reaching and/or maintaining a target temperature at the sample holder. Thus, a sensor signal indicative of the actual temperature may be used as input for a feedback loop controlling the operation of the humidifier. In addition, or as an alternative, a sensor signal indicative of the humidity inside the housing may be used as well. The sensor signal may be supplied to the controller and used as input in the feedback loop controlling the humidifier. The humidity can for example be increased by increasing the supply of water to the humidifier. Conversely, the humidity can be decreased by reducing the water supply. Increasing the humidity may result in more steam being available for condensation on the sample holder, thereby increasing the temperature, whereas reducing the humidity may result in less steam being available for condensation.

The humidifier may further be controlled with the aim of providing a substantially continuous flow of moisture into the reaction chamber during the heating of the sample holder, and/or during the addition of the reagents. This may be achieved by balancing the water supply to the humidifier and, in case of the humidifier being a vaporizer, the power supply to a heating element of the vaporizer. A relatively low power supply combined with a relatively high water supply may result in the heating element dropping to a temperature below 100°C, which risks to result in a ceased steam production. Conversely, a relatively high power supply combined with a relatively low water supply may result in a more or less immediate evaporation of the water and thus an intermittent steam flow. The balancing of the water and power supply may aim at maintaining a certain, and preferably constant, amount of liquid water present inside the steam generator during the entire heating phase of the sample holder.

The rotatable body may be configured to be at least partly covered by a liquid layer, which for example may comprise reagents to be added to the samples. The liquid layer may be provided on the outer surface of the rotatable body as the rotatable body is rotating to facilitate an even distribution of the liquid over the outer surface. A dispenser may be employed to supply the liquid and/or a reagent to the liquid layer.

In some embodiments, a liquid sensor may be provided to generate signal indicative of an amount of liquid present in the liquid layer.

The liquid layer may be formed by means of a liquid contacting means, such as for instance a squeegee, a doctor blade or a glass slide configured to distribute liquid within the liquid layer. The liquid contacting means may thus comprise a surface which can be arranged to form a well-defined gap between the outer surface of the rotatable body and the liquid contacting means, through which the liquid layer passes as the rotatable body rotates. The thickness and uniformity of the liquid layer may hence be determined by the gap. As a consequence, liquid may be accumulated in a meniscus formed on the liquid contacting means, at the interface between the liquid contacting means and the outer surface of the rotating body. The size of the meniscus may be indicative of the amount of liquid present in the liquid layer. The amount of liquid present in the liquid layer, for example represented as the size of the meniscus, may be determined by means of a sensor arranged at the liquid contacting means. Such a sensor may for instance be formed as a capacitive sensor or a resistive sensor and may comprise one or several sets of electrodes arranged on a surface of the liquid contacting means coming in contact with the meniscus. In further examples, the liquid contacting means may comprise a temperature sensor for generating a signal indicative of a temperature of the liquid.

In a particular embodiment, the liquid contacting means may be formed of a printed circuit board, PCB, having an edge or surface configured to redistribute the liquid as the sample holder is rotated relative to the PCB, as well as a sensor providing a signal indicative of the amount of liquid that has accumulated at the PCB and/or a temperature thereof. The sensor for the amount of accumulated liquid may for example be implemented as conductive lines arranged on a surface of the PCB.

In some embodiments, the apparatus may comprise a liquid removal means configured to remove liquid from the outer surface of the rotatable body. The liquid removal means may for example comprise a reduced pressure device, such as a drainage tube, configured to draw liquid from the rotating body. The liquid removal means may be arranged to draw liquid that has been accumulated at the liquid contacting means, such as for instance from the meniscus. In further examples, the liquid removal means may comprise a mechanical device, such as a squeegee, a blade, or a brush, for removing at least some of the liquid from the outer surface. The liquid removal means may thus be configured to contact a liquid layer present on the rotatable body and displace or remove the liquid mechanically.

The liquid removal means may further comprise means for adjusting an angle of attack of the liquid removal means, such as the angle of attack of a blade contacting the liquid layer. By adjusting the angle of attack, the amount of liquid being removed can be controlled. Further, a translating means may be provided to adjust a distance from the surface of the rotatable body at which the liquid removal means is positioned. Adjusting the distance from the surface allows for controlling the thickness of the liquid layer remaining on the surface after the liquid removal means has contacted the liquid during rotation of the rotatable body. It will be appreciated that the same mechanical element in some examples may serve both as a liquid contacting means for distributing liquid within the liquid layer and as a liquid removal means for removing liquid from the liquid layer, depending for instance on the configuration and angle of attack.

The force of gravity may also be employed, for example by stopping the rotation of the rotatable body to allow liquid to gravitate to the lowermost portion of the rotatable body, from where it can be actively removed by a liquid removal means as described above or be allowed to form drops falling from the rotatable body. The present example may be combined with the liquid contacting means being removed from the surface of the rotatable body, such that the liquid contacting means is not contacting the liquid as it moves with gravity towards the lowermost portion of the rotatable body.

In yet another example, liquid may be removed from the surface of the rotatable body by means of centrifugal forces. This may for example be achieved by rotating the rotatable body at rotational speeds sufficiently high to cause liquid to be thrown off from the surface. Advantageously, any liquid contacting means may be removed from the surface prior to the centrifuging.

The signal indicating the amount of accumulated liquid may be supplied to the controller, which may be configured to control the operation of the liquid contacting means (for instance by varying the spacing between the liquid contacting means and the outer surface of the rotatable body), or the operation of the liquid removal means. In further examples, the controller may be configured to use the signal indicating the amount of accumulated liquid for controlling the amount of moisture released into the reaction chamber. An increased accumulation of liquid at the liquid contacting means may for example indicate that the moisture production rate, or the amount of moisture released into the reaction chamber per unit time, can be reduced in order to avoid, or at least reduce the effects of, the condensing water diluting the reagents on the sample holder.

The above-mentioned optional, additional features of the apparatus according to the first aspect, when applicable, apply to the method according to the second aspect as well. Further objectives and advantages with the present invention will become apparent when studying the following detailed disclosure, the drawings, and the appended claims. Those skilled in the art realize that different features of the present invention, even if recited in different claims, can be combined in embodiments other than those described in the following.

### Brief description of the drawings

The present inventive concept will now be described in more detail, with reference to the appended drawings showing embodiment(s) of the invention.
Figure 1 shows an illustration of an apparatus according to an embodiment of the present invention.
Figure 2 is a cross section of a housing enclosing a reaction chamber, as well as a humidifier, a temperature sensor and a dispenser according to an embodiment.
Figure 3 is a perspective view of an apparatus according to an embodiment.
Figure 4 is an exploded view of a humidifier according to an embodiment.
Figure 5 is a top view of a liquid contacting means according to an embodiment.
Figure 6 is a schematic diagram relating to an apparatus according to an embodiment.
Figures 7a and 7b are flow charts outlining methods according to some embodiments.

### Detailed description

The present invention relates to techniques for performing biochemical assays on samples, such as for instance DNA or RNA samples, to retrieve DNA sequence information. Generally, the assay includes adding reagents to the sample, such as a fluorophore comprised in a fluorescently labelled nucleotide configured to bind to the samples, and image the sample using some type of microscopy imaging. The technique may involve using four types of fluorophores for labelling a respective one of the four letters A (adenine), C (cytosine), G (guanine) and T (thymidine) used to represent the building blocks, nucleotides, of DNA. Typically, different types of fluorophores are used to label different letters. The imaging may thus comprise taking four images, one for each letter. Other approaches exist where the number of images required per base may be reduced. When the information for one nucleobase has been extracted, the fluorophore related to that base may be removed and another set of reagents may be added to synthesize and read the next base of the DNA strands.

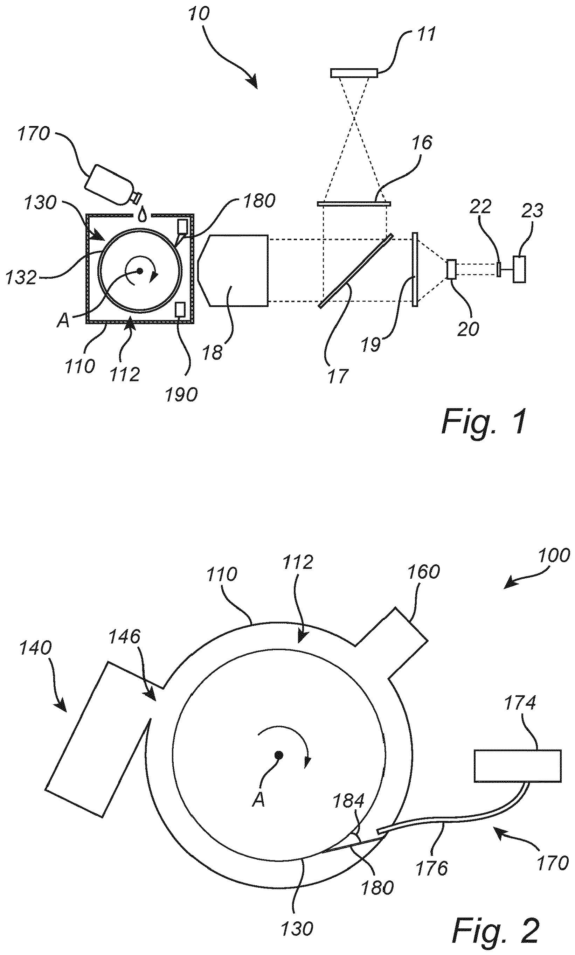

An overview of an apparatus for performing a biochemical assay of samples, such as DNA or RNA fragments, is illustrated in figure 1. The apparatus 100 may be configured to receive a sample holder in the form of a rotatable body 130, having an outer surface to which the samples may be attached. The apparatus 100 may further comprise a liquid dispenser 170 and a liquid contacting means 180 for facilitating the addition of reagents to the samples and control a shape of the liquid layer on the outer surface of the sample holder 130. The sample holder 130 may be rotatable around a longitudinal axis, or symmetry axis A to facilitate an even distribution of the reagents over the outer surface, and further to enable efficient scanning of the investigated samples. Further, a heat source, also referred to as an additional heat source 190, may be provided to increase a temperature of the outer surface of the sample holder 130. The heat source 190 may be at least partly arranged within the reaction chamber defined by the housing 110 of the apparatus. The heat source 190 may for instance heat the outer surface by means of convection or infrared radiation.

The scanning may be performed by a scanning device 10, such as a confocal microscope, a light sheet fluorescence microscope, or a wide field microscope, configured to illuminate the samples and to detect photons emitted or scattered from the samples. The rotatable body 130 is configured to be rotated around the longitudinal axis A while the scanning device 10 detects photons originating from the samples arranged on the outer surface of the rotatable body 130.

As illustrated in figure 1, the scanning device 20 may comprise at least one light source 11 configured to illuminate the samples. The light may be directed to the samples by an optical system, for instance comprising a lens 16, a beam splitter 17 and an objective lens 18.

Scattered and/or fluorescent light from the illuminated samples may be collected by the objective lens 18, collimated and passed through the beam splitter 17. A second optical system 19 may then generate an image of the illuminated sample on a detector 22. The detector 22 is preferably a photodetector configured to generate a signal that can be processed in a signal processing unit 23.

It is to be understood that the specific components and the exact setup of the apparatus 100 and the scanning device 10 disclosed herein are exemplary only. For example, the apparatus 100 may very well use multiple light sources 11 emitting light with different properties, such as wavelengths. Furthermore, the configuration of optical systems, including for instance mirrors, beam splitters, apertures, pin holes, and filters may vary as long scanning of the samples in the liquid layer may be performed. It will also be appreciated that the parts of the assay performed in the reaction chamber may be performed at a physically separate location or setup, and that the sample holder may be transported to a scanning station for performing the imaging. Alternatively, the parts of the assay performed in the reaction chamber may be integrated with the scanning, similar to the setup illustrated in the example of figure 1.

Figure 2 is a schematic cross section of a rotatable body 130 and a reaction chamber 112 of an apparatus 100 according to some embodiments of the present inventive concept. The apparatus 100 may be similarly configured as the one discussed above with reference to figure 1. Figure 2 illustrates a housing 110 having an interior defining a reaction chamber 112, which may be at least partly sealed so as to allow a climate, differing from the immediate surroundings of the housing, to be defined at least temporarily in the reaction chamber 112. In different words, the housing may be configured to enable a microclimate to be provided in the reaction chamber 112. The housing 112 may be configured to enclose the entire rotatable body 130, or parts of it. In case of the latter, the housing 112 may comprise at least one opening allowing the rotatable body 130 to extend therethrough.

The microclimate may be provided by means of a humidifier, such as a steam generator 140 configured to supply steam into the reaction chamber 112. As a result, the humidity inside the reaction chamber may be increased, as well as the temperature of the outer surface of the rotatable body 130 as the steam condensates on the surface. Preferably, the reaction chamber 112 may be sufficiently closed or sealed to hinder at least some of the steam from escaping the reaction chamber 112 during an assay, thereby allowing for an elevated temperature during at least the time it takes to perform the assay or allow the reagents to react with the samples. Typical temperatures for DNA sequencing may lie in the range of 50-60 °C, and the reaction times may be in the order of minutes, such as 3-5 minutes (the same order of magnitude both for base incorporation and cleavage). Amplification of DNA fragment may require a temperature in the range 40-50 °C, such as about 43 °C, and a reaction time of about 1 hour. Alternatively, amplification may be performed at a lower temperature, such as room temperature, provided the reaction time is sufficiently long, such as 2 hours. To be able to start sequencing a primer may have to be attached or hybridized to a single stranded DNA fragment. This reaction typically takes 5-10 minutes and may be performed at any temperature in the range from room temperature up to 60 °C. In some cases, the assay may comprise a step of removing the bases that has been added to a single stranded DNA fragment. This enables sequencing to be restarted, possibly with a different primer. The process of removing bases is called strip off and is typically performed at 70 °C for about 1 minute.

As illustrated in figure 2, the steam generator 140 may comprise an outlet 146 arranged to release the steam into the reaction chamber 112. The outlet 146 may thus be communicatively coupled to, or integrally formed with, a corresponding passage through a wall of the housing 110 to allow the generated steam to be supplied to the reaction chamber 112. The configuration and operation of the steam generator 140 will be discussed in further detail in connection with the following figures.

The apparatus 100 may further comprise a temperature sensor 160, such as for instance an IR sensor or an electric sensor, configured to provide a signal indicative of a temperature of the outer surface of the rotatable body 130. The IR sensor 160 may be attached to the housing 110 and arranged to gather information from at least a portion of the rotatable body 130, for example through an opening in a wall of the housing 110. The sensor 160 may further be communicatively connected to a control unit (not shown) receiving the output signal from the sensor 160.

Further, the apparatus 100 may comprise a dispenser 170 for adding a reagent to the outer surface of the rotatable body 130. The dispenser 170 may comprise a conduit, or dispensing tool 176, connected to a reservoir 174 storing the reagent. During operation, the reagent may be supplied from the reservoir 174, via the conduit 176, into the reaction chamber 112 and added to a liquid layer arranged on the outer surface of the rotatable body 130. A similar arrangement may be used to remove liquid, such as excess liquid, from the rotatable body 130. Such a liquid removal means may thus comprise a conduit, such as a drainage tube, connected to a suction means. The addition and removal of reagents and liquid from the liquid layer may be performed with the aim of maintaining a target concentration of the reagents, which for instance may be 50% (by volume) or above.

In some examples, a liquid contacting means 180 may be arranged to distribute liquid, such as the added reagent, within the liquid layer on the rotatable body 130. The liquid contacting means 180 may comprise a surface or edge which can be arranged at a certain separation from the outer surface of the rotatable body 130 to define a thickness of the liquid layer. Examples of such a liquid contacting means 180, having a surface configured to define a gap between the outer surface and the liquid contacting means 180, includes squeegees, doctor blades and glass slides. The liquid contacting means 180 may be co-located with the dispenser 170 or liquid removal means as described above. Thus, the exit (or entrance, accordingly) of such a tool may be arranged on a surface of the liquid contacting means 180 so as to allow liquid or reagents to be supplied to the liquid layer via the surface of the liquid contacting means 180 (and, consequently, to remove liquid that has been accumulated at the liquid contacting means 180).

As indicated in figure 2, liquid may be accumulated at the interface between the liquid contacting means 180 and the outer surface of the rotatable body 130. The accumulated liquid may be considered to form a meniscus 184 extending at least partly along the surface of the liquid contacting means 180. In some examples, reagents can be added to the meniscus by means of the dispenser 170, and in further examples liquid may be drained from the meniscus by means of a liquid removal means. As will be described in the following, the amount of accumulated liquid may be monitored, for example by determining a size or extension of the meniscus 184 and used in a feedback loop controlling an operation of the apparatus 100.

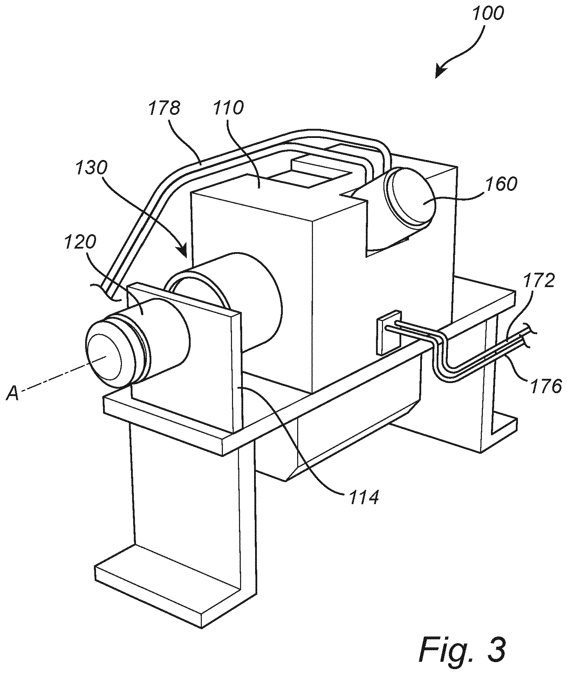

Figure 3 is a perspective view of an apparatus 100 according to some embodiments, which may be similarly configured as the embodiments disclosed above in connection with figures 1 and 2. Figure 3 shows the apparatus 100 when a sample holder, in the shape of a cylindrical rotatable body 130, is mounted and partly accommodated in a reaction chamber formed by the housing 110. The protruding part of the rotatable body 130 may be attached to a rotating generating member 120 configured to support the rotatable body 130 when arranged within the reaction chamber and to rotate the rotatable body around the longitudinal axis A. The rotation generating member 120 may for example comprise a motor, such as an electric motor, configured to generate a torque allowing the rotatable body 130 to rotate during the assay.

The rotation generating member 120 may comprise, or be coupled to, a coupling arrangement (not shown) configured to be releasably engaged with a corresponding coupling arrangement on the rotatable body. The coupling arrangement may for example provide a magnetic coupling allowing the torque generated by the rotation generating member 120 to be transmitted to the rotatable body 130 without mechanical contact. The coupling arrangement may further comprise a surface portion suitable for engaging a rotational bearing arranged in a support structure 114 and configured to guide and support the rotatable body 130 during rotation. The releasable nature of the coupling arrangement allows for the rotatable body 130 to be detached from the coupling arrangement and moved to another station, such as for instance the scanner as discussed with reference to figure 1.

A temperature sensor 160 may be attached to the housing 110 and arranged such that it can measure a temperature on the inside of the reaction chamber 112. Preferably, the temperature sensor 160 may be an IR sensor arranged to receive IR radiation emitted from a portion of the rotatable body 130. Thus, the temperature sensor 160 may be arranged at an opening of the housing, allowing access to reaction chamber 112.

Figure 3 further illustrates a tube or conduit 176 of the dispenser 170 for adding a reagent to the rotatable body, as well as a tube or conduit forming a liquid removal means 172 for removing liquid from the rotatable body 130. The conduits 172, 176 are in the present example illustrated as tubes entering/exiting the housing via a respective bushing. The apparatus 100 may further comprise tubes 178 for flushing the rotatable body 130, for instance to remove excess nucleotides prior to imaging.

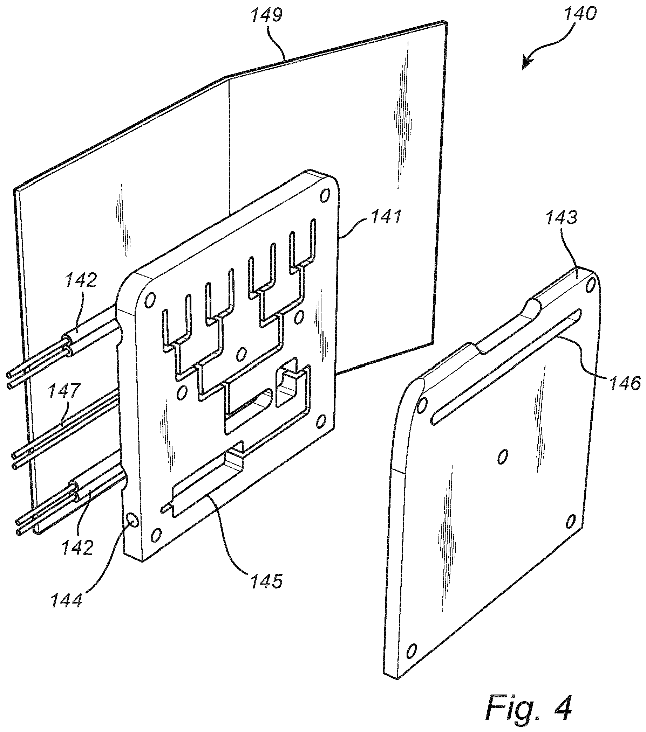

The apparatus 100 may further comprise a humidifier 140, which in the present view is arranged on the side of the housing 110 facing away from the viewer and therefore is not visible. An example of the humidifier 140 will instead be described in the following with reference to figure 4.

Figure 4 is an exploded perspective view of a humidifier 140, which may be used in an apparatus 100 according to any of the above-described embodiments. The humidifier 140 may be configured as a steam generator 140 comprising a heating element 142 configured to evaporate water into steam, a conduit 144 configured to provide water to be evaporated by the heating element 142, and a steam outlet 146 for releasing the steam into the reaction chamber 112. The steam generator 140 may thus be attached to the housing 110, or at least operably coupled to the housing 110 such that the generated steam can be supplied to the reaction chamber 112.

In the present example, the steam generator 140 comprises a main body 141 comprising a channel structure 145 for guiding water and/or steam from the water supply 144 to the outlet 146. The main body 141 may be in thermal contact with the heating element 142 so as to allow the channel structure 145, or at least parts of the channel structure 145, to be heated to a temperature that allows the water to evaporate. The heating element 142 may for example be a resistive heating element generating heat in response to an electrical current being passed therethrough. The temperature of the heating element, and thus its capability of evaporating water into steam, may hence be controlled by varying the electrical power supplied to the heating element 142. The heating element 142 may for example be attached to a surface of the main body so as to transfer the heat generated by the heating element 142 into surfaces of the channel structure 145 accommodating the water/steam.

The steam generator 140 may further comprise a temperature sensor, or thermometer 147, which for instance may be attached to the main body 141. The temperature sensor 147 may be configured to provide a signal indicative of a temperature of the heating element 142, the main body 141 and/or the channel structure 145. The signal may be fed to a controller and used for controlling, inter alia, the power supply to the heating element.

Water, possibly mixed with a gas such as air, may be supplied to the steam generator 140 by means of a conduit 144 connected to the channel structure 145. During operation, the temperature of the supplied water is increased by the heat generated by the heating element 142 until the water starts evaporating. The generated steam may then raise through the channel structure, possibly propelled by an air flow supplied with the water, until it reaches the steam outlet 146 connected to the reaction chamber 112.

The main body 141 may for example be formed of a plate-like structure, such as a metal plate, in which the channel structure may be milled or molded. Further, a cover plate 143 may be arranged to close the channel structure 145 and provide an interface to the housing 110. On the side facing away from the housing 110 a thermal insulation plate 149 may be arranged, protecting the surroundings and operators from the heat generated by the heating element 142.

The amount of moisture supplied into the reaction chamber per unit time may be controlled or adjusted in several ways. Firstly, the flow through the outlet 146 may be controlled, for instance by means of an adjustable restriction. Thus, the amount of steam released into the reaction chamber may be reduced by increasing the restriction and increased by releasing the restriction. Secondly, the evaporation rate may be controlled. This may for example be achieved by varying the power supplied to the heating element 142, or by varying the amount of water supplied to the channel structure 145. It will also be appreciated that by varying the air/water ratio of the air/water mixture supplied to the steam generator 140 the amount of generated steam may be adjusted.

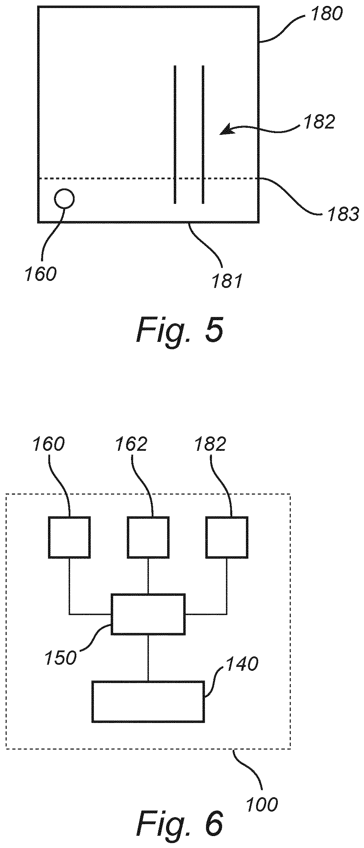

Figure 5 illustrates an example of the liquid contacting means 180 shown in figures 1-3. The liquid contacting means 180 may be formed as a blade and comprise a surface configured to be aligned with the longitudinal axis A of the rotatable body 130 and employed for distributing liquid in the liquid layer passing through a gap defined between the surface of the liquid contacting means 180 and the outer surface of the rotatable body 130. As the surface is contacting the passing liquid layer, liquid may be accumulated on the liquid contacting means 180. The amount of accumulated liquid may be indicated by the size of the surface portion which is wetted by the liquid. The wetted region is in the present figure indicated by the region between the edge 181 and the dashed line 183.

In the present example, the liquid contacting means 180 is formed of a printed circuit board, PCB, with conductive lines forming sensors for measuring properties of the accumulated liquid. The PCB may for example comprise a capacitive sensor 182 configured to generate a signal indicating the size of the wetted region and thus a total amount of accumulated liquid. The capacitive sensor utilizes the fact that a capacitance between two conductors, such as the conductive lines in figure 5, varies with the dielectric properties of the medium separating the conductors, and that presence of liquid hence may affect the dielectric properties. In an alternative example, the sensor may be a resistive sensor utilizing the varying resistance as the separating gap between the conductors gradually is filled by the liquid.

The liquid contacting means 180 may further comprise a temperature sensor 160, which may be used in addition to the IR sensor discussed in connection with figures 2 and 3, or as an alternative to the same. The temperature sensor 160 may hence be employed to generate a signal indicative of a temperature of the liquid accumulated on the liquid contacting means 180, which may be considered as representative for the temperature in the liquid layer covering the rotatable body 130.

Figure 6 is a schematic outline of an apparatus 100 according to some embodiments, which may be similarly configured as the embodiments discussed above in connection with any of the previous figures. Thus, the apparatus may comprise a housing enclosing a reaction chamber, a rotation generating member configured to support a rotatable body, and a steam generator configured to release steam to the reaction chamber. In order to avoid undue repetition, reference is made to the description of figures 1-5. In the following, aspects and examples relating to the control and operation of the apparatus in general, and the steam generator in particular, will be discussed.

As illustrated in figure 6, the apparatus 100 may comprise a control unit 150 configured to control an amount of steam released into the reaction chamber. This may for example be implemented as a control of the amount of steam, as measured for instance by volume or weight, released per unit time. The control unit 150 may hence be operatively connected to the steam generator 140 and/or to elements or structures capable of affecting the release of steam into the reaction chamber. The control unit 150 may thus be capable of affecting the evaporation process, for instance by varying the amount of heat generated by a heating element of the steam generator 140 or an amount of water supplied to the steam generator 140. The control unit 150 may also be configured to control a restriction of a passage through which the steam passes on its way into the reaction chamber. The restriction may for example be arranged at the steam outlet, as described with reference to figure 4. In further examples, the control unit 150 may be configured to control the operation of other elements of the apparatus, such as the rotation generating member, the dispenser, the liquid removal means and the liquid contacting means.

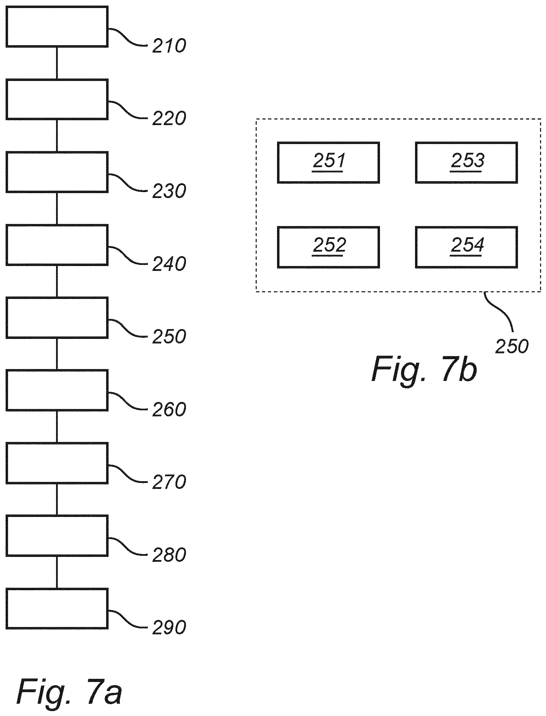

The control unit 150 may hence comprise a processor, such as a central processing unit (CPU), microcontroller or microprocessor, configured to control functions of the apparatus 100 based on a signal provided by a sensor, such as a temperature sensor 160, a humidity sensor 162 (arranged to provide a signal indicative of the humidity within the reaction chamber) and a liquid sensor 182 as previously described. Examples of such functions 210-290 and 251-254 are described below in connection with figures 7a and 7b.

Figure 7a is a flow chart illustrating a method for performing an assay according to some embodiments, using an apparatus 100 as disclosed in for instance figures 1-6. The method may comprise a set of actions or steps, also referred to as functions, carried out by the apparatus and/or a scanning device such as a confocal microscope.

The method may hence comprise arranging 210 the rotatable body at least partly in the reaction chamber, rotating 220 the rotatable body, and heating 230 it by releasing steam into the reaction chamber. The method may further comprise generating 240 a signal indicative of a temperature on the outer surface of the rotatable body and controlling 250 the amount of steam released into the reaction chamber per unit time based on the signal. In some examples, the method also includes providing 260 a liquid layer on the outer surface, removing 270 at least part of the liquid layer by a liquid removal means, and adding 280 a reagent to the liquid layer. The liquid layer may for example be provided 260 by steam condensing on the outer surface and, in some examples, by adding further liquid through a dispensing means. In subsequent steps of the assay, the samples arranged on the rotatable body may be imaged 290 or scanned by a scanning device. The scanning device may be integrated with the apparatus 100 comprising the reaction chamber or provided as a separate station to which the rotatable body may be transported for the imaging.

The above-described control unit 150 may be configured to control at least the heating 230, and more particularly the releasing 250 of steam into the reaction chamber. It will however be appreciated that the control unit 150 may be configured to control one or several of the other functions as well, such as the arranging 210 of the rotatable body in the reaction chamber, the rotating 220 of the rotatable body, the providing 260, 270 of a liquid layer as well as a reagent, and the operation of the liquid removal means.

Figure 7b illustrates optional steps for controlling 250 the amount of steam released to the reaction chamber, with the aim of providing a controlled, elevated temperature for the samples while at the same time preventing the samples from drying out and the reagents from being too diluted. The method 250 may comprise controlling 251 a power supply connected to a heater comprised in the steam generator, controlling 252 a restriction of a flow of steam into the reaction chamber, controlling 253 an air flow to the steam generator, and controlling 254 a water flow to the steam generator.

A person skilled in the art realizes that the present invention is not limited to the embodiments described above. On the contrary, many modifications and variations are possible within the scope of the appended claims. Such modifications and variations can be understood and effected by a skilled person in practicing the claimed invention, from a study of the drawings, the description, and the appended claims.

## Claims

1. An apparatus (100) for conducting a biochemical assay on a sample, the apparatus comprising
a housing (110) enclosing a reaction chamber (112);
a rotation generating member (120) configured to support a rotatable body (130) such that at least part of the rotatable body can be arranged within the reaction chamber, wherein the rotatable body is configured to hold at least one sample at an outer surface thereof;
a humidifier (140) configured to humidify an atmosphere in said reaction chamber;
wherein the rotation generating member is further configured to rotate the rotatable body around a longitudinal axis (A) of the rotatable body while at least a part of the assay is performed.

2. The apparatus according to claim 1 or 2, wherein the rotatable body is a cylindrical body;
the outer surface is a lateral surface of said cylindrical body; and
the longitudinal axis (A) is a central axis (A) of the cylindrical body.

3. The apparatus according to claim 1 or 2, further comprising a control unit (150) operatively connected to the humidifier to control an amount of moisture released into the reaction chamber per unit time.

4. The apparatus according to claim 3, further comprising a temperature sensor (160) configured to provide a signal indicative of a temperature on the outer surface of the rotatable body, wherein the control unit is configured to control the humidifier based on the signal provided by the temperature sensor.

5. The apparatus according to any of the preceding claims, further comprising a heat source (190) configured to heat the outer surface of the rotatable body.

6. The apparatus according to any of the preceding claims, wherein the humidifier is a steam generator comprising:
a heating element (142) configured to evaporate water to produce the steam;
a conduit (144) configured to provide the water to be evaporated by the heating element;
a steam outlet (146) configured to release the steam in the reaction chamber.

7. The apparatus according to any one of the preceding claims, wherein the apparatus further comprises a dispenser (170) for adding a reagent to the outer surface of the rotatable body.

8. The apparatus according to any one of the preceding claims, wherein the rotatable body is configured to be at least partly covered by a liquid layer; wherein the apparatus further comprises a liquid contacting means (180) configured to distribute liquid within said liquid layer.

9. The apparatus according to claim 8, wherein the liquid contacting means comprises at least one of a liquid sensor (182) configured to provide a signal indicative of an amount of liquid present in said liquid layer and a temperature sensor (160) configured to provide a signal indicative of a temperature in said liquid layer.

10. The apparatus according to any one of the preceding claims, further comprising a liquid removal means (172) arranged for removing liquid from the outer surface of the rotatable body.

11. A method for performing an assay, comprising the steps of
arranging (210) a rotatable body at least partly in a reaction chamber enclosed by a housing, wherein at least one sample to be studied in the assay is arranged on an outer surface of the rotatable body;
rotating (220) said rotatable body around a longitudinal axis (A); and
humidifying (230) an atmosphere in said reaction chamber.

12. The method according to claim 11, further comprising
generating (240) a signal indicative of a temperature on the outer surface of the rotatable body, and
controlling (250) an amount of moisture released to the reaction chamber per unit time, based on the signal.

13. The method according to claim 12, wherein the moisture is generated by a steam generator releasing steam into the reaction chamber, and wherein the step of controlling an amount of moisture released to the reaction chamber comprises at least one of:
controlling (251) a power supply (143) connected to a heater comprised in said steam generator;
restricting (252) a flow of steam into the reaction chamber;
controlling (253) an air flow to said steam generator; and
controlling (254) a water flow to said steam generator.

14. The method according to any one of claims 11-13, further comprising providing (260) a liquid layer on the outer surface of the rotatable body; and providing (280) at least one reagent to the liquid layer.

15. The method according to claim 14, further comprising removing (270) at least part of the liquid in the liquid layer.
